# EUROPÄISCHE PATENTSCHRIFT

(11) **EP 1 902 282 B1**
(45) Veröffentlichungstag und Bekanntmachung des Hinweises auf die Patenterteilung: **28.02.2018**
(21) Anmeldenummer: 06841252.7
(22) Anmeldetag: 13.06.2006
(51) Int. Cl.: G01K 7/01

(54) **SENSOR**
SENSOR
CAPTEUR

(30) Priorität: 06.07.2005 DE 102005031604
(43) Veröffentlichungstag der Anmeldung: 26.03.2008
(73) Patentinhaber: ROBERT BOSCH GMBH, 70442 Stuttgart (DE)
(72) Erfinder: OPITZ, Bernhard, 71229 Leonberg (DE); FEYH, Ando, 71732 Tamm (DE); WOLST, Oliver, 72622 Nuertingen (DE)
(86) Internationale Anmeldenummer: PCT/EP2006/063152
(87) Internationale Veröffentlichungsnummer: WO 2007/054380

(56) Entgegenhaltungen:
- DE-A1- 10 219 247
- US-A- 5 600 174
- US-A1- 2003 110 867
- NASSIOPOULOU A G ET AL: "POROUS SILICON AS AN EFFECTIVE MATERIAL FOR THERMAL ISOLATION ON BULK CRYSTALLINE SILICON" PHYSICA STATUS SOLIDI (A). APPLIED RESEARCH, BERLIN, DE, Bd. 182, Nr. 1, 12. März 2000 (2000-03-12), Seiten 307-311, XP008001587 ISSN: 0031-8965

## Beschreibung

Die Erfindung betrifft einen Sensor, insbesondere einen Thermo- und/oder Gassensor nach dem Oberbegriff des Anspruchs 1, sowie ein Verfahren zu dessen Herstellung.

### Stand der Technik

Es ist bekannt thermische Sensoren mit Hilfe von temperaturabhängigen Widerständen, vorzugsweise Pt-Widerstände, oder mit Hilfe von Thermopiles, hierbei handelt es sich um Strukturen zur Ausnutzung der Thermospannung an Übergängen zweier verschiedener Metalle oder Metall/Polysilizium, in Dünnschichttechnologie zu realisieren. Hierzu werden diese Strukturen auf einer dünnen dielektrischen Membran aufgebracht, durch deren geringe Wärmeleitfähigkeit beispielsweise Veränderungen eines Temperaturprofils über dieser Membran sensiert werden kann. Dieses Prinzip wird beispielsweise bei Luftmassensensoren angewendet.

Beide Ausführungsformen weisen aufgrund ihres Herstellungsprozesses eine hohe Driftanfälligkeit auf und haben daher den Nachteil, dass sie sehr aufwendig stabilisiert werden müssen, da die über die Lebensdauer veränderlichen Materialeigenschaften eine Drift des Sensorelements hervorrufen. Selbst mit einer solchen Stabilisierung (z.B. Temperprozesse) sind diese Driften zum Teil noch enorm.

Die Einstellung des Temperaturprofils erfolgt über Dünnschichtstrukturen, z.B. Widerstandsheizer aus Platin. Die Membranherstellung wird in der Regel durch einen bulkmikromechanischen (BMM) Prozess realisiert, d.h. von der Rückseite des Substrates muss mittels anisotropen Ätzens, z.B. mit KOH (Kaliumhydroxid), sämtliches Material bis auf die Membran entfernt werden. So ist z.B. ein Herstellungsprozess bekannt, bei dem eine 1 µm dicke Siliziummembran an einem Wafer mit einer Schichtdicke von 360 µm durch Entfernen von 359 µm der Siliziumschicht mittels eines Ätzprozesses erzeugt wird.

Weiterhin finden thermische Sensoren beispielsweise in Fingerdrucksensoren Anwendung. Hierbei werden die speziellen Sensorstrukturen, Heizer, Messfühler und dergleichen auf einem Bulk-Substrat mit geringer Wärmeleitfähigkeit und vergleichsweise stabilen mechanischen Eigenschaften aufgebracht, z.B. Keramiken, da die mechanische Belastung bei dieser Anwendung deutlich höher ist. Der Wärmefluss durch die Hautrillen wird nun ortsabhängig detektiert und ausgewertet.

Des Weiteren sind thermisch entkoppelte Membranen auch im Bereich der Gassensorik von Interesse. Halbleiterbasierte Gassensoren beruhen typischerweise auf adsorptionsbedingter Widerstandsänderung von Metalloxidschichten oder auf Potentialänderung funktionaler Gate-Schichtstapel von Feldeffekttransistoren. Um eine effektive Dissoziation von Adsorbaten sowie hinreichend kurze Ansprechzeiten zu gewährleisten und gleichzeitig dauerhafte Kontamination zu vermeiden, müssen diese Sensoren jedoch bei erhöhten Temperaturen betrieben werden, typischerweise T > 150 °C. Je nach Anwendung werden auch mit aufwendigen Prozessschritten hergestellte Membranen zur thermischen Entkopplung verwendet, um, wenn notwendig, die Heizleistung zu minimieren bzw. schnell gepulsten Betrieb zu ermöglichen. Ein Verfahren zur Herstellung einer solchen Membran ist z.B. aus der DE 102 00 40 24 285.2 "Mikrostrukturiertes Bauelement und Verfahren zur dessen Herstellung" bekannt.

Ein weiterer Nachteil herkömmlicher Systeme ist durch deren Aufbau gegeben. Entweder lässt sich eine hohe Empfindlichkeit realisieren, oder aber eine hohe mechanische Stabilität. Beide Eigenschaften lassen sich mit bisher bekannten Verfahren nicht gleichzeitig umsetzen. Auch eine verhältnismäßig grobe Ortsauflösung, bedingt durch große flächige Strukturen der Thermopiles und Pt-Heizer und Messfühler, wird als nachteilig empfunden.

Aus dem Stand der Technik zeigt die US 5,600,174 einen auf einen CMOS aufgesetzten Temperatursensor mit über einer Kaverne auf einer freitragenden Zunge angeordnetem Temperatursensor. Die DE 102 19 247 A1 zeigt einen Temperatursensor mit auf einer auf einem Isolationselement aufgebrachten Schutzschicht angeordnetem Sensorelement. Die US2003/0110867 A1 offenbart ein Thermoelement wobei der erste Thermoschenkel in porösem Material und der zweite Thermoschenkel auf diesem Material angeordnet ist.

### Aufgabe und Vorteile der Erfindung

Der vorliegenden Erfindung liegt daher die Aufgabe zugrunde, einen Sensor der eingangs dargelegten Art zu verbessern.

Die Aufgabe wird durch die Merkmale der unabhängigen Ansprüche gelöst. In den Unteransprüchen sind vorteilhafte und zweckmäßige Weiterbildungen der Erfindung angegeben.

Dementsprechend betrifft die Erfindung einen Sensor nach dem Oberbegriff des Anspruchs 1, der sich dadurch auszeichnet, dass er ein eine temperaturabhängige elektrische Eigenschaft aufweisendes Sensorelement in der Form eines Widerstandes oder einer Impedanz aufweist. Damit kann eine von einem durch das Sensorbauelement fließenden, elektrischen Strom hervorgerufene und an ihm abfallende Durchflussspannung U_{F} erzeugt werden. Der Strom durch das Bauelement kann dabei bei einer bevorzugten Ausführungsform durch eine Stromquelle, insbesondere eine Konstantstromquelle dem Bauelement aufgeprägt sein. Zur Versorgung eines kapazitiven Sensorelementes kann aber auch eine Wechselstromquelle vorgesehen sein.

Bei bekannter Temperaturabhängigkeit des Widerstandes bzw. der Impedanz, und damit der daran abfallenden Spannung ist somit eine Aussage über die am Sensorbauelement vorherrschende Temperatur möglich. Besonders vorteilhaft für solche Anwendungen sind Bauelemente mit linear verlaufenden, insbesondere mit verhältnismäßig steil ansteigenden Kennlinien. Je linearer und je steiler diese Kennlinien sind, desto exakter ist die Aussage über die am Bauelement vorherrschende Temperatur bzw. über eine zu ermittelnde Temperaturdifferenz.

Als besonders geeignet für die Ausbildung eines solchen Bauelementes werden Halbleiterbauelemente angesehen, wobei die Durchflussspannung U_{F} bevorzugt an einem pn-Übergang des Halbleiterbauelementes erfasst wird.

Dieser Vorgehensweise liegt die Erkenntnis zugrunde, dass die temperaturabhängige Durchflussspannung eines pn-Übergangs nur von der Bandlücke des verwendeten Halbleiters abhängig ist, und nicht von dessen Dotierkonzentration. Für Silizium beträgt diese Spannung dU_{F}/dT = -2mV/K. Grundsätzlich sind jedoch auch andere Halbleiter zur Ausbildung eines erfindungsgemäßen Sensors geeignet, wie z.B. Germanium, SiGe, GaN, SiC und dergleichen mehr.

Um die Sensibilität des so gebildeten Sensors zu erhöhen, kann im Weiteren eine Spannungserhöhung durch eine Reihenschaltung solcher Bauelemente vorgesehen sein.

Zur Reduzierung von Störeinflüssen kann es weiterhin vorteilhaft sein, die elektrische Kontaktierung des Bauelements direkt am p-Bereich bzw. am n-Bereich des pn-Übergangs auszubilden. Durch einen derartig ausgebildeten Abgriff des Messsignales kann ein weiterer negativer Einfluss, bedingt durch Zuleitungs- und Übergangswiderständen, eliminiert werden.

Für Anwendungsfälle, in denen eine Einflussnahme auf die Umgebungstemperatur in einem Bereich des Sensors gewünscht ist, kann dieser im Weiteren ein Heizelement umfassen. Mit einem zusätzlich ausgebildeten, eine Referenztemperatur erfassendem Bauelement und/oder der Ausbildung eines gassensitiven Elements wird die Einsatzmöglichkeit eines solchen Sensors noch deutlich erhöht.

Für ein resistives Sensorprinzip können Elektroden (typischerweise Pt-Elektroden) aufgebracht werden. Diese dienen der Detektion von Widerstandsänderungen durch Adsorption von Gasen in einer darüber liegenden Funktionsschicht, typischerweise Metalloxid. Andererseits können auch gassensitive Feldeffekttransistoren (FET) im CMOS-Prozess realisiert werden. Die Gate-Funktionsschicht beinhaltet typischerweise Oxidschicht und katalytisches Metall. Als Heizung können z.B. Dioden oder FETs verwendet werden.

Durch eine Anordnung solcher Sensorelemente auf einem thermischen Isolationselement ist im Weiteren eine Reduzierung der Temperaturabhängigkeit solcher aktiver Bauelemente von einem sie tragenden Grundkörper erzielbar. Ein wesentlicher Kern der Erfindung liegt in der Verwendung von porösem Silizium. Vorzugsweise weist daher ein solches thermisches Isolationselement eine poröse Struktur auf, der neben der positiven thermischen Eigenschaft auch noch die einer hohen Stabilität inne wohnt. Außerdem wird durch poröses Silizium eine elektrische Entkopplung vom Substrat erreicht (spezifischer Widerstand von porösem Silizium Typ mit etwa 10⁶ Ohm-Zentimeter). Dadurch können großflächig viele einzelne der zuvor beschriebenen, verschiedenen Sensorelemente zur Bereitstellung eines bezüglich der Signalerfassung empfmdlichen, jedoch hinsichtlich mechanischer Stabilität sehr robusten Sensors angeordnet werden. Die einzelnen Sensorelemente können jeweils auf bzw. in einem extra ausgebildeten oder auch auf einem gemeinsam genutzten Isolationselement angeordnet sein, welches seinerseits in einem bezüglich der Ausbildung eines der vorgenannten Sensorelemente nach folgendem Prozessschritt ausgebildet wird.

In einer weiteren Ausführungsform kann über den bisher beschriebenen strukturellen Aufbau eine zusätzliche Trägerschicht aufgebracht werden, die zumindest einzelne, vorzugsweise jedoch mehrere oder auch alle Sensorelemente überdeckt. Nach Überdecken der gewünschten Flächenbereiche kann durch entsprechend ausgebildete Öffnungen das bei den bisherigen Ausführungsformen als thermisches Isolationselement dienende poröse Silizium teilweise oder auch vollständig entfernt werden. Besonders gut geeignet sind hierfür Ätzvorgänge, z.B. nasschemisches Ätzen mittels KOH, H2O2 mit HF oder Trockenätzprozesse wie ClF3. Bei vollständigem Entfernen des porösen Siliziums unterhalb des Sensorelementes hängt dieses dann nur mehr an der über ihr angeordneten Trägerschicht, die im Sinne der Erfindung auch als Membran bezeichnet wird, da sie bei vollständiger Entfernung des porösen Siliziums den dadurch entstehenden Hohlraum tragend überspannt.

Durch das vollständige Entfernen des porösen Siliziums ist eine Temperatureinkopplung vom Substrat auf das Sensorelement nur mehr über das in dem so ausgebildeten Hohlraum befindliche Medium und die Trägerschicht bzw. Membran möglich. Zur weiteren Reduzierung der Wärmeeinkopplung wird eine Strukturierung der Trägerschicht bzw. Membran vorgeschlagen. Diese kann beispielsweise durch das jeweilige Sensorelement umrandende Ausnehmungen realisiert sein. Das Sensorelement hängt in diesem Fall an einzelnen Verbindungspunkten der Trägerschicht bzw. Membran, die die mechanische Verbindung mit dem Substrat ausbilden. Die Trägerschicht oder Membran besteht ihrerseits vorzugsweise ebenfalls aus einem thermisch hoch isolierenden Material um selbst möglichst geringen Einfluss auf thermische Einkopplungen zu bewirken.

Ein weiterer Vorteil wird durch die geringe Dimension der Diodenstrukturen und daraus resultierender hoher Ortsauflösung erreicht.

### Ausführungsbeispiel

Die Erfindung wird anhand der Zeichnungen und der nachfolgenden, darauf bezugnehmenden Beschreibung näher erläutert.

Es zeigen:
- Figuren 1 bis 5: eine schematische Schnittdarstellung durch einen Halbleiterträger in verschiedenen Herstellungs-Prozessschritten;
- Figur 6: einen Teilausschnitt eines solchen Halbleiterträgers nach einem späteren Prozessschritt;
- Figur 7: eine elektrische Messschaltung;
- Figur 8: eine Draufsicht auf eine schematisch dargestellte Sensoranordnung auf der Basis eines Halbleiterträgers entsprechend den Figuren 1 bis 6;
- Figur 9 und 9B: einen gegenüber der Figur 7 abgewandelten Aufbau einer Messschaltung;
- Figur 9A: eine Draufsicht auf die Kontaktierung der Schaltung nach Figur 7, entsprechend der Darstellung der demgegenüber abgewandelten Ausführungsform 9B und 9;
- Figur 10: eine weitere, abgewandelte Ausführungsform einer Messschaltung;
- Figur 11: eine Anordnung mehrerer sensitiver Elemente auf einem gemeinsam genutzten Isolationselement in Draufsicht und
- Figur 12: eine demgegenüber abgewandelte Ausführungsform mit separat ausgebildeten Isolationselementen, sowie eine weiter abgewandelte Ausführungsform einer Sensorschaltung;
- Figur 13 bis 15: eine schematische Schnittdarstellung einer weiteren Ausführungsform in verschienen Herstellungsprozessschritten und
- Figur 16: eine Draufsicht auf diese abgewandelte Ausführungsform.

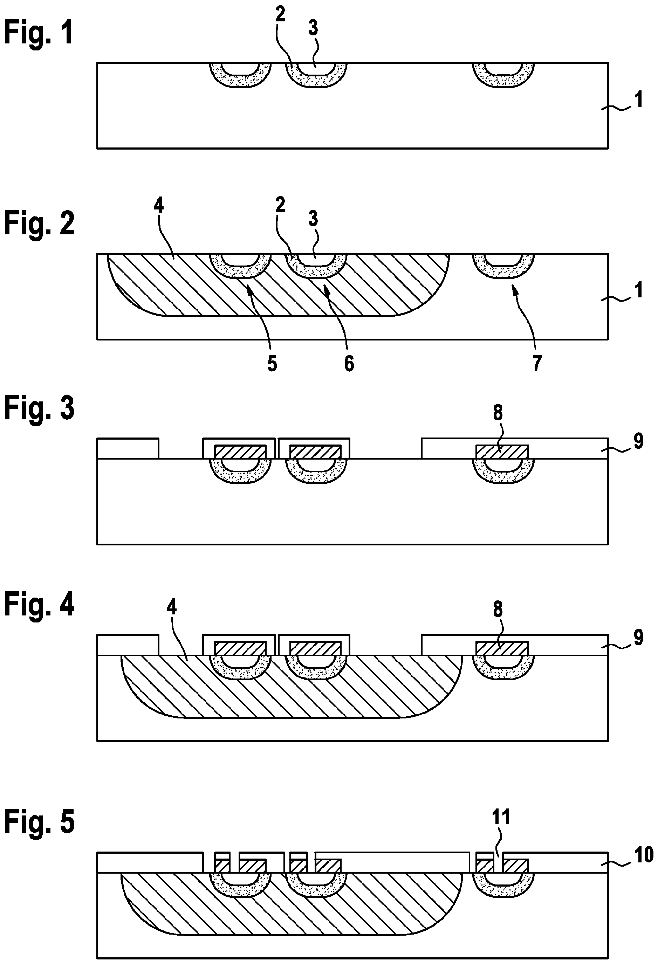

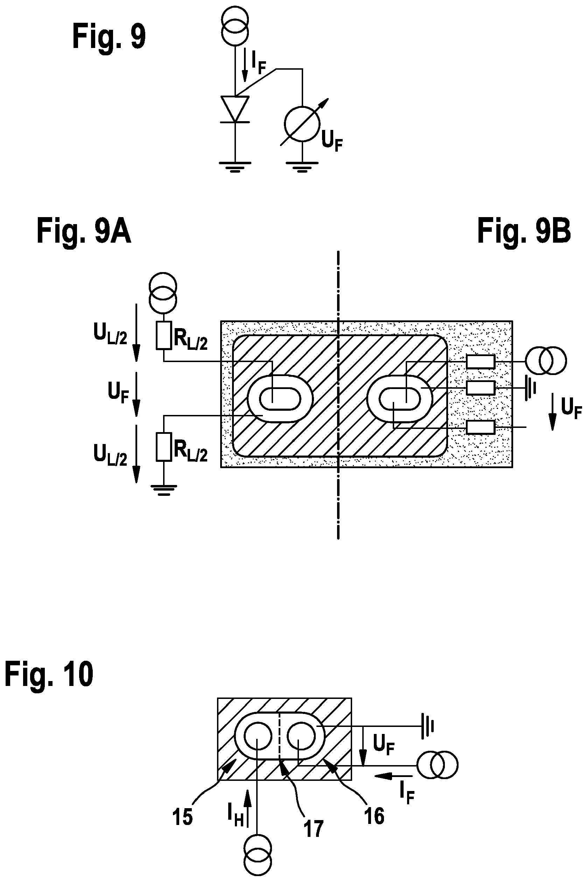

Im Einzelnen zeigt nun Fig. 1 einen Halbleiterträger 1, vorzugsweise aus p-dotiertem (100) Silizium. Darin sind Diodenstrukturen 2, 3 mit Hilfe von Standard Halbleiter-Prozessen, Implantation bzw. Diffusion, ausgebildet. In einer n-Zone 2 ist ein p-Gebiet 3 eingebracht. Diese sind zum Einen im Bereich 6 der thermisch isolierenden Wanne 4 und daneben im Bulk-Bereich 7 lokalisiert, Fig. 2 - 5. Der Bereich 4 wird erst in einem späteren Prozessschritt generiert, er ist in Fig. 2 nur zur besseren Verdeutlichung eingezeichnet. Die Diode 7 dient zur Messung der Temperaturreferenz, der Chip-Temperatur, während die Diode 5 als Temperaturfühler und die Diode 6 als Heizer dient. Zur besseren thermischen Kopplung können die Dioden 5 und 6 auch in einer n-Wanne realisiert werden (vgl. Fig. 10).

Nach Fertigstellung der Diodenstrukturen erfolgt nun eine thermische Oxidation 8 (Fig. 3 - 8) und eine Strukturierung des Oxids. Der Oxidfilm dient im Wesentlichen zum Schutz des pn-Übergangs. Er wird vorzugsweise während des Diffusions-Schrittes der implantierten (Dioden-) Strukturen gebildet.

Anschließend wird eine Maskierschicht 9 für den folgenden porösen Silizium-Prozessschritt aufgebracht und strukturiert. Diese Schicht dient zur Definition des Bereiches der thermischen Isolationswanne 4 und zum Schutze der thermischen Oxidschicht 8 über den pn-Übergängen der Diodenstrukturen. Als Maskierschicht 9 eignen sich hier Schichten, welche eine geringe Ätzrate in Flusssäure aufweisen, insbesondere SiN, Si3N4, SiC. Die Schichtdicken liegen typischerweise im Bereich von 10 - 200 Nanometer. Diese Maske kann jedoch auch mit Hilfe einer lokalen n-Dotierung erfolgen.

Anschließend wird die thermische Isolationswanne 4 generiert (Fig. 4). Hierzu wird das Silizium im Wannenbereich porosifiziert. Dies erfolgt durch elektrochemisches Ätzen in einem flusssäurehaltigen (HF) Elektrolyten. Zur Herabsetzung der Oberflächenspannung wird ein Netzmittel hinzugefügt, dies ist vorzugsweise Isopropanol, Ethanol oder ein Tensid. Je nach Substratdotierung und gewünschter Mikrostruktur kann die Konzentration hierbei im Bereich zwischen 10% und 50% HF betragen. Durch Wahl der Stromdichte kann die Porosität und damit die Wärmeleitfähigkeit in weiten Bereichen 10% - 80% eingestellt werden.

Für die Sicherstellung der elektrischen Funktion ist es wichtig, dass die Diodenstrukturen nicht porosifiziert werden. Hier nutzt die Erfindung die extreme Dotierselektivität des porösen Silizium-Prozesses. Die im vorhergehenden Prozessschritt eingebrachten Diodenstrukturen werden über n-Wannen (Fig. 1 - 2) mit p-Gebieten (Fig. 1 - 3) realisiert. Die äußere n-Wanne wird durch den elektrochemischen Prozess nicht angegriffen, da für den Auflösungsprozess von Silizium Löcher (Defektelektronen) notwendig sind, welche in p-Silizium in ausreichender Form zur Verfügung stehen, nicht jedoch in n-Si. Daher sind die Funktionsstrukturen inert gegenüber dem porösen Silizium- Prozessschritt.

Es lassen sich so je nach Wahl der Prozessparameter nanoporöse, mesoporöse oder makroporöse Strukturen realisieren. Um eine gute thermische Isolation zu erhalten, wird vorzugsweise nano- und mesoporöses Silizium verwendet. Je nach Anwendung kann jedoch auch makroporöses Silizium von Vorteil sein.
Nanoporöses Silizium lässt sich vorzugsweise bei Substratdotierungen unter 10¹⁷/cm³ und HF-Konzentrationen oberhalb von 30% herstellen. Mesoporöses Silizium hingegen erhält man bei Substratdotierungen über 10¹⁷/cm³ und HF-Konzentrationen im Bereich von 10% - 40%.

Für eine geringe thermische Leitfähigkeit sollte die Porosität möglichst größer 50% betragen. Je nach Mikrostruktur und Porosität sind mit diesem Prozess Werte der thermischen Leiffähigkeit im Bereich 0,1 - 0,8 W/mK erreichbar (Bulk-Si: 156 W/mK). Für eine hohe mechanische Stabilität (Anwendung als Luftmassensensor oder Fingerabdrucksensor) sind Porositäten im Bereich 50% - 70% vorteilhaft. Die besten Eigenschaften in Richtung Kombination von hoher mechanischer Stabilität und guter thermischer Isolation sind bei Verwendung von nanoporösem Silizium gegeben. Diese Modifikation besitzt des Weiteren äußerst isotrope Eigenschaften, was für einen schnellen thermischen Sensor von Vorteil ist.

Die Tiefe der Isolationswanne 4 liegt vorzugsweise im Bereich einige 10 µm bis 100 µm, je nach Ätzrate sind hierfür Zeiten zwischen 5 Minuten und 20 Minuten nötig. Da der Ätzprozess sehr isotrop ist, werden die inerten Diodenstrukturen somit wie in Fig. 4 angedeutet, vollständig unterätzt und sind anschließend in poröses Material eingebettet.

Die Isotropie des Ätzprozesses führt unter anderem auch zu einem Unterätzen der Maske (skizziert in Fig. 4), dies kann jedoch beim Design der Membran berücksichtigt werden.

Je nach verwendeter Mikrostruktur des porösen Siliziums kann anschließend noch ein Oxidationsschritt erfolgen, um die Schicht zu stabilisieren und die Wärmeleitfähigkeit durch partielle Oxidation weiter herabzusetzen. Dies ist insbesondere im Falle des mesoporösen Siliziums von Vorteil. Hier beträgt der Oxidationsgrad vorzugsweise 10% - 30%.

Die pn-Übergänge werden durch diesen Oxidationsschritt nicht beeinflusst, da zur Oxidation von porösem Silizium aufgrund dessen hoher innerer Oberfläche lediglich Temperaturen im Bereich um 400 °C erforderlich sind.

Anschließend erfolgt das Entfernen der Ätzmaske 9. Hierbei ist zu beachten, dass die Ätzmaske selektiv gegenüber der thermischen Oxidschicht 8 zu ätzen ist. Dies kann entweder nasschemisch, z.B. heiße Phosphorsäure bei Verwendung von Si3N4/ SiN, oder physikalisch geschehen. Im Falle einer physikalischen Abtragung erhält man jedoch eine Stufe im Wannenbereich, des Weiteren muss sicher gestellt werden, dass nach Abtrag noch thermisches Oxid über den pn-Übergängen vorhanden ist. Daher ist ein nasschemisches Verfahren im Allgemeinen vorzuziehen.

Je nach Anwendung kann die Ätzmaske jedoch auch auf der Struktur belassen werden. Man erhöht damit eine zusätzliche Stufe um einige 10 Nanometer. Zugleich wird die Prozessführung erheblich erleichtert, wenn die Ätzmaske nicht entfernt wird.

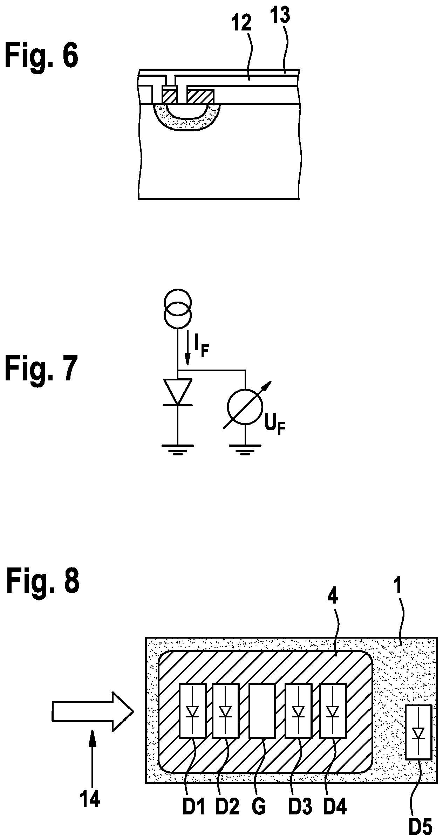

Nach Abscheiden einer dünnen dielektrischen Verschlussschicht (Fig. 5 - 10) um 20 nm - 200 nm, vorzugsweise PECVD-Oxid, erfolgt die Strukturierung der Anschlusskontakte 11 der Diodenstrukturen. Die elektrischen Verbindungen werden mittels einer Metallebene (Fig. 6 - 12) bewerkstelligt. Vorzugsweise wird hier Al bzw. AlSiCu verwendet. Hierdurch werden niederohmige, ohmsche Kontakte sichergestellt. Abschließend wird eine dünne Deckschicht 13 im Bereich von 200 nm abgeschieden (SiN/ Si3N4/ SiC/ SiO2).

Dieser Prozess ist ebenfalls grundsätzlich mit pn- vertauschten Dotierungen möglich. Da während dem porösen Silizium-Schritt jedoch eine Rückseiten-Beleuchtung erforderlich ist, um die notwendigen Löcher zu generieren, ist dieser Prozess aber komplexer.

Bei der Realisierung von resistiven Gassensoren kann im Bereich der Dioden- oder Transistorstrukturen zur Heizung und Temperaturmessung auf der dielektrischen Verschlussschicht (PECVD-Oxid) eine Elektrodenstruktur, vorzugsweise Pt-Interdigitalstruktur, aufgebracht werden, und anschließend nach Porosifizierung wahlweise in Dick- oder Dünnschichttechnik die sensitive Schicht, vorzugsweise als Metalloxid, aufgebracht werden.

Im Falle der gassensitiven Feldeffekttransistoren können vor der Porosifizierung der thermischen Isolationswanne mittels geeigneter Implantation FETs und weitere benötigte Bauelemente strukturiert werden. Im Falle von Silizium als Halbleitermaterial empfiehlt sich CMOS-Prozessierung. Die aktiven Strukturen, FETs, ggf. Dioden, Widerstände, werden hierbei in einer n-dotierten Epitaxieschicht realisiert. Diese schützt die aktiven Elemente im nachfolgenden Porosifizierungsschritt. Ausgedehnte p-Sinker ermöglichen die Porosifizierung des umgebenden und unterliegenden Membranbereichs.

Nach erfolgter Porosifizierung können die Gatebereiche freigelegt und funktionale Schichtstapel prozessiert werden. Diese Funktionalisierung beinhaltet neben thermischen Behandlungen, Oxidation, Nitrierung, auch eine Deposition von aktiven Materialien, wie z.B. Oxiden, Oxidnitriden, Siliziden, Nitriden oder katalytische Metalle, z.B. Pt, Pd, Rh, Ir, Au zur Unterstützung der Dissoziation von Adsorbaten. Es sind hierbei auch Sandwichstrukturen und poröse oder strukturierte Metallisierungen denkbar.

Die Verschlussschicht des porösen Siliziums und elektrische Kontaktierung kann wie oben bei den thermischen Sensoren beschrieben erfolgen.

### Elektrischer Aufbau/Betrieb

Die Dioden zur Temperaturmessung werden im Konstant-Strom- Modus (Fig. 7) betrieben. Eine Stromquelle prägt einen konstanten Betriebstrom I_{F} von typischerweise einigen 10 µA ein. Der Spannungsabfall über der Diode U_{F}, die Durchfluss-Spannung, ist temperaturabhängig, entsprechend der Gleichung
dU_{F}/dT = -2mV/K (Si-Diode). Dieser Zusammenhang ist unabhängig von der Dotierung. Er wird lediglich durch die Bandlücke des verwendeten Halbleiters definiert (Si: 1,1eV).

Für einen Massenfluss-Sensor, insbesondere einen Luftmassensensor ist weiterhin ein Heizelement vorgesehen, um eine gewisse Übertemperatur und ein Temperaturprofil oberhalb der Membran zu realisieren. Dies erfolgt idealer Weise ebenfalls durch eine Diode.

In Fig. 8 ist eine prinzipielle Anordnung der Dioden für eine Anwendung als Massenfluss-Sensor in Draufsicht dargestellt. Das Element G wird hierfür nicht benötigt, es ist lediglich zur Veranschaulichung dargestellt.

Zur Messung der Chiptemperatur (Referenz) dient Diode D5 auf dem Substrat 1. Die Strömungsrichtung des zu sensierenden Mediums, z.B. Luft, ist durch den Pfeil 14 veranschaulicht.

Die weiteren Sensorstrukturen sind mittels Dioden D1 - D4 in der Wanne 4 realisiert. Die Dioden D1 und D4 dienen zur Temperaturmessung, während die Dioden D2 und D3 als Heizerdioden fungieren. Die Regelung erfolgt nun, indem eine konstante Übertemperatur von D1 zu D5 mittels D2 und von D4 zu D5 mittels D3 eingestellt wird.

Durch Messung der Differenzleistung von D2 und D3, Messung des jeweiligen Diodenstromes, und Messung der Flussspannung über D1 und D4 kann nun der Massenfluss sensiert werden, da dieser das durch D2 und D3 über der Membran eingestellte Temperaturprofil verändert.

Da sich das Messsignal in der vorgeschlagenen Schaltung
Fig. 7 aus der Summe des temperaturabhängigen Spannungsabfalls an der Diode U_{F} und an den Zuleitungs- und Kontaktwiderständen R_{L} zusammensetzt (U_{M} = U_{F} + U_{L}) (Fig. 9A), kann ein modifizierter Aufbau (Fig. 9B) vorteilhaft sein. Mit Hilfe eines zweiten Abgriffes direkt an der Anode kann die Spannung nahezu stromlos gemessen werden. Der Spannungsabfall an Zuleitungen und Kontakten geht daher gegen null. Die Genauigkeit des Verfahrens kann somit deutlich gesteigert werden. Hierbei steigt jedoch auch die Zahl der benötigten Anschlüsse, z.B. Bondpads.

Des Weiteren können die Messdiode 16 und die Heizdiode 15 in einer gemeinsamen n-Wanne (Fig. 10) realisiert werden. Der Vorteil dieser Abwandlung ist eine bessere thermische Kopplung von Mess- und Heizerdiode. Ggf. wird eine Barriere 17 mit eingebracht, um eine elektrische Kopplung von Mess- und Heizdiode zu verhindern.

Eine weitere vorteilhafte Abwandlung stellt die Realisierung mittels Transistoren dar. Die Transistoren zur Messung der Temperatur werden hierbei in Form einer so genannten "Bandgap-Referenz"-Schaltung aufgebaut, womit eine hoch genaue Temperaturmessung möglich ist.

Hierzu wird die Differenz der Basis-Emmiterspannung zweier ähnlicher Transistoren A und B herangezogen. Diese ist temperaturabhängig und stellt sich dar zu:
ΔU_{BE} = k_{B}T/e*In (I_{A}/I_{B}*A_{B}/A_{A}), mit e: Elementarladung, k_{B}: Bolzmannkonstante, T: Temperatur [K], I_{A/B}: Stromfluss durch Transistoren (vorzugsweise werden Transistoren mit hoher Stromverstärkung verwendet, dann ist I_{A/B} = I_{CE,A/B}) und A_{A/B}: elektrisch wirksamer Basisquerschnitt.

Hierbei wird die Tatsache ausgenutzt, dass die Sättigungsstromdichte J_{S} eines Transistors nur Materialabhängig ist. Die Stromdichte durch einen Transistor ist daher beschrieben durch: J_{A/B} = J_{S} exp(e*U_{BE,A/B}/(k_{B}T)).

Des Weiteren bietet die Verwendung von Transistoren Vorteile bei der Heizung. Sie ermöglichen bei gleichem Heizerstrom eine höhere Verlustleistung als Dioden.

Die U_{F}(T)-Charakteristik kann gegebenenfalls auch in einem Kennfeld hinterlegt werden. Dies bietet sich an, falls durch den Aufbau Nichtlinearitäten auftreten.

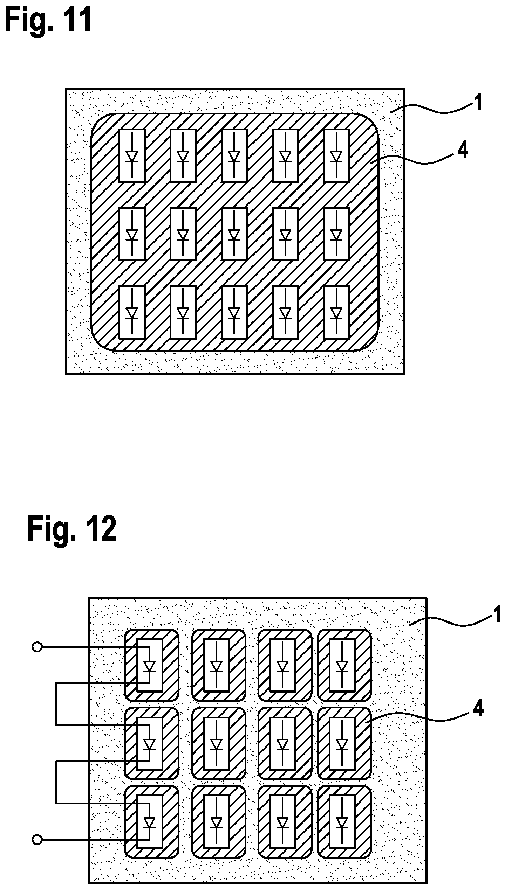

Mögliche flächige Anordnungen der Diodenstrukturen zur ortsabhängigen Sensierung sind in Fig. 11 und 12 dargestellt. Fig. 11 zeigt eine Anordnung in einer gemeinsamen thermischen Isolationswanne. Fig. 12 zeigt eine Anordnung in isolierten einzelnen Wannenbereichen. Im Fall der Fig. 12 sind die einzelnen Einheiten thermisch entkoppelt. Die Diodenstrukturen können Heizer, Temperaturfühler oder eine Kombination aus Heizer und Fühler sein.

Zur besseren thermischen Entkopplung kann in einer weiteren vorteilhaften Ausführungsform ein Hohlraum unter der porösen Siliziumstruktur generiert werden. Die kann z.B. im selben Prozessschritt durch Erhöhung der elektrischen Stromdichte (= Elektropolitur) geschehen.

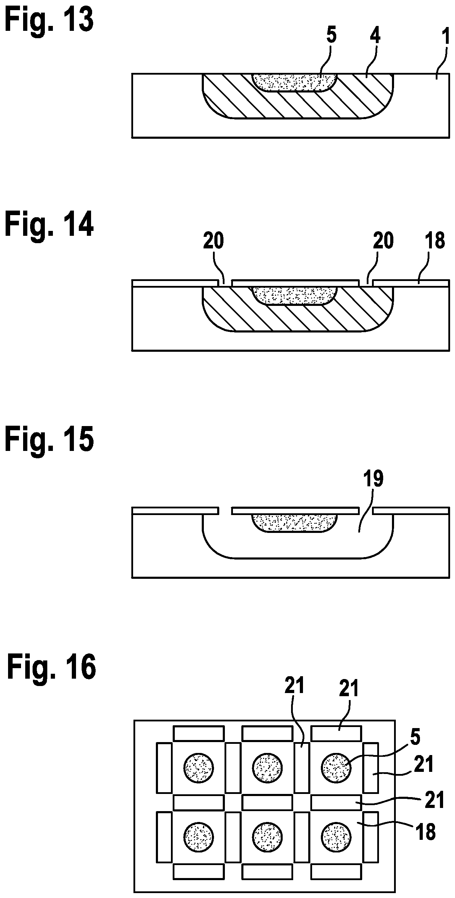

Die Figuren 13 bis 16 zeigen eine hinsichtlich einer thermischen Entkopplung einzelner Sensorelemente weiter optimierte Ausführungsform eines Sensors. Zur Veranschaulichung des Prozesses ist in den Figuren 13 bis 15 lediglich die Umgebung eines einzelnen Sensors dargestellt. Die Draufsicht auf die Figur 16 zeigt eine Ausführungsform, in der eine Gruppe von Sensoren entsprechend zusammengefasst ist.

Die Figur 13 zeigt im Detail das Substrat 1, in welchem ein bisher als thermisches Isolationselement 4 fungierend beschriebenes poröses Silizium wannenförmig eingebettet ist und seinerseits in sich das betreffende Sensorelement ebenfalls eingebettet aufnimmt.

Die Figur 14 zeigt eine über der Anordnung aus der Figur 13 aufgebrachte Trägerschicht oder Membran 18 mit zwei darin ausgebildeten Öffnungen 20. Durch diese Öffnungen 20 kann beispielsweise mittels eines Ätzverfahrens das darunter ausgebildete, poröse Silizium entsprechend der Darstellung in der Figur 15 zur Verbesserung der thermischen Entkopplung des betreffenden Sensorelementes entfernt werden. Die thermische Entkopplung des Sensorelementes vom Substrat über die Trägerschicht bzw. Membran 18 kann durch die Verwendung eines thermisch hoch isolierenden Materials für die Ausbildung der Membran ebenfalls deutlich positiv beeinflusst werden.

Eine weitere positive Beeinflussung der thermischen Entkopplung ist durch die zusätzliche Ausbildung entsprechender Strukturen 21 an der Membran 18 möglich. Im Beispiel der Figur 16 sind hierzu das jeweilige Sensorelement umrahmend etwa rechteckförmige, längliche Ausnehmungen beispielhaft dargestellt. Die mechanisch tragende Verbindung ist über die einzelnen Eckpunkte der verbleibenden Membranflächen realisiert, über die z.B. auch die entsprechenden Anschlüsse der Sensorelemente geführt werden können.

## Patentansprüche

1. Sensor, insbesondere Thermo- und/oder Gassensor, umfassend ein elektrisches Sensorbauelement (5) mit einer ihren Wert temperaturabhängig ändernden, elektrischen Eigenschaft, wobei ein thermisches Isolationselement (4) mit einer porösen Struktur vorgesehen ist, **dadurch gekennzeichnet, dass** das Sensorbauelement (5) ein Halbleiterbauelement ist und einen pn-Übergang umfasst, dass die temperaturabhängige elektrische Eigenschaft eine Durchflussspannung ist und dass das Sensorbauelement (5) in dem thermischen Isolationselement (4) eingebettet ist.

2. Sensor nach Anspruch 1, **dadurch gekennzeichnet, dass** eine Reihenschaltung von Sensorbauelementen (5) vorgesehen ist.

3. Sensor nach einem der vorangehenden Ansprüche, **dadurch gekennzeichnet, dass** die elektrische Kontaktierung des Sensorbauelementes (5) direkt am p-Bereich bzw. am n-Bereich des pn-Übergangs ausgebildet ist.

4. Sensor nach einem der vorangehenden Ansprüche, **dadurch gekennzeichnet, dass** ein Heizelement (6) vorgesehen ist.

5. Sensor nach einem der vorangehenden Ansprüche, **dadurch gekennzeichnet, dass** ein eine Referenztemperatur erfassendes Sensorbauelement (7) vorgesehen ist.

6. Sensor nach einem der vorangehenden Ansprüche, **dadurch gekennzeichnet, dass** ein gassensitives Element (G) vorgesehen ist.

7. Sensor nach einem der vorangehenden Ansprüche, **dadurch gekennzeichnet, dass** das Heizelement (6), das eine Referenztemperatur erfassende Sensorbauelement (7) und/oder das gassensitive Element (G) in oder auf dem thermischen Isolationselement (4) angeordnet ist.

8. Verfahren zur Herstellung eines Sensors nach einem der vorangehenden Ansprüche, umfassend ein elektrisches Sensorbauelement (5) mit einer ihren Wert temperaturabhängig ändernden, elektrische Eigenschaft, wobei das Sensorbauelement (5) ein Halbleiterbauelement ist und einen pn-Übergang umfasst, wobei in einem ersten Verfahrensschritt das elektrische Sensorbauelement (5) ausgebildet wird, gegebenenfalls zusammen mit weiteren elektrischen Sensorbauelementen (5, 6, 7), und in einem weiteren, nachfolgenden Verfahrensschritt ein zumindest das Sensorbauelement (5) thermisch isolierendes Isolationselement (4), **dadurch gekennzeichnet, dass** das thermische Isolationselement (4) durch Porosifizierung so generiert wird, dass das Sensorbauelement (5) in dem Isolationselement (4) eingebettet wird.

## Claims

1. Sensor, in particular thermal and/or gas sensor, comprising an electrical sensor component (5) having an electrical property which changes its value depending on the temperature, a thermal insulation element (4) with a porous structure being provided, **characterized in that** the sensor component (5) is a semiconductor component and comprises a pn junction, **in that** the temperature-dependent electrical property is a forward voltage, and **in that** the sensor component (5) is embedded in the thermal insulation element (4).

2. Sensor according to Claim 1, **characterized in that** a series circuit of sensor components (5) is provided.

3. Sensor according to one of the preceding claims, **characterized in that** electrical contact is made with the sensor component (5) directly at the p region or n region of the pn junction.

4. Sensor according to one of the preceding claims, **characterized in that** a heating element (6) is provided.

5. Sensor according to one of the preceding claims, **characterized in that** a sensor component (7) which senses a reference temperature is provided.

6. Sensor according to one of the preceding claims, **characterized in that** a gas-sensitive element (G) is provided.

7. Sensor according to one of the preceding claims, **characterized in that** the heating element (6), the sensor component (7) sensing a reference temperature and/or the gas-sensitive element (G) is/are arranged in or on the thermal insulation element (4).

8. Method for producing a sensor according to one of the preceding claims, comprising an electrical sensor component (5) having an electrical property which changes its value depending on the temperature, the sensor component (5) being a semiconductor component and comprising a pn junction, the electrical sensor component (5) being formed in a first method step, possibly together with further electrical sensor components (5, 6, 7), and an insulation element (4) which thermally insulates at least the sensor component (5) being formed in a further, subsequent method step, **characterized in that** the thermal insulation element (4) is generated by means of porosification in such a manner that the sensor component (5) is embedded in the insulation element (4).

## Revendications

1. Capteur, notamment capteur thermique et/ou de gaz, comprenant un composant capteur (5) électrique ayant une propriété électrique dont la valeur varie en fonction de la température, un élément d'isolation thermique (4) ayant une structure poreuse étant présent, **caractérisé en ce que** le composant capteur (5) est un composant semiconducteur et comporte une jonction pn, **en ce que** la propriété électrique dépendante de la température est une tension à l'état passant et **en ce que** le composant capteur (5) est enrobé dans l'élément d'isolation thermique (4).

2. Capteur selon la revendication 1, **caractérisé en ce qu'**un circuit série composé de composants capteurs (5) est présent.

3. Capteur selon l'une des revendications précédentes, **caractérisé en ce que** la mise en contact électrique du composant capteur (5) est configurée directement au niveau de la zone p ou au niveau de la zone n de la jonction pn.

4. Capteur selon l'une des revendications précédentes, **caractérisé en ce qu'**un élément chauffant (6) est présent.

5. Capteur selon l'une des revendications précédentes, **caractérisé en ce qu'**un composant capteur (7) qui détecte une température de référence est présent.

6. Capteur selon l'une des revendications précédentes, **caractérisé en ce qu'**un élément sensible aux gaz (G) est présent.

7. Capteur selon l'une des revendications précédentes, **caractérisé en ce que** l'élément chauffant (6), le composant capteur (7) qui détecte une température de référence et/ou l'élément sensible aux gaz (G) sont disposés dans ou sur l'élément d'isolation thermique (4).

8. Procédé de fabrication d'un capteur selon l'une des revendications précédentes, comprenant un composant capteur (5) électrique ayant une propriété électrique dont la valeur varie en fonction de la température, le composant capteur (5) étant un composant semiconducteur et comportant une jonction pn, le composant capteur (5) électrique étant formé dans une première étape du procédé, le cas échéant conjointement avec des composants capteurs (5, 6, 7) électriques supplémentaires, et au moins un élément d'isolation (4) qui réalise l'isolation thermique du composant capteur (5) dans une étape supplémentaire suivante du procédé, **caractérisé en ce que** l'élément d'isolation thermique (4) est généré par porosification de telle sorte que le composant capteur (5) est enrobé dans l'élément d'isolation (4).
